# EUROPEAN PATENT APPLICATION

(11) **EP 4 814 273 A1**
(43) Date of publication of application: **30.09.2026**
(21) Application number: 24893897.9
(22) Date of filing: 11.10.2024
(51) Int. Cl.: F01N 3/28, B32B 5/06, B32B 5/26, B32B 7/12, D04H 1/4209, D21H 13/36, D21H 27/30

(54) **MAT MATERIAL AND EXHAUST GAS PURIFICATION DEVICE**

(30) Priority: 21.11.2023 JP 2023197498
(71) Applicant: IBIDEN CO., LTD., Ogaki-shi, Gifu 503-8604 (JP)
(72) Inventor: MUSHIKA, Taiga, Takahama-shi, Aichi 444-1301 (JP); UGA, Atsushi, Takahama-shi, Aichi 444-1301 (JP)
(74) Representative: Winter, Brandl - Partnerschaft mbB
(86) International application number: PCT/JP2024/036458
(87) International publication number: WO 2025/109903

(57) **Abstract**

Provided is a mat material including: a stacked mat in which a plurality of mats each containing inorganic fibers and having a rectangular shape in a plan view are stacked; and a fixing member fixing the stacked mat, the plurality of mats including a first mat and a second mat, a sagging amount of the first mat measured in a sagging test conducted using two mats of the same type stacked and fixed together being greater than a sagging amount of the second mat measured in the sagging test, the mat material exhibiting a sagging amount of 60 mm or less when measured with the second mat placed at the bottom and the first mat placed on the top.

## Description

### TECHNICAL FIELD

The present invention relates to a mat material and an exhaust gas purification apparatus.

### BACKGROUND ART

The exhaust gas discharged from internal combustion engines (e.g., diesel engines) contains particulate matter (hereinafter also referred to as "PM"). Adverse effects of PM on the environment and human bodies have been problems in recent years. The exhaust gas also contains harmful gas components such as CO, HC, and NOx, which creates concerns about the impact of such harmful gas components on the environment and human bodies.

Accordingly, various exhaust gas purification apparatuses that collect PM contained in the exhaust gas or purify harmful gas components have been proposed. Such an exhaust gas purification apparatus includes an exhaust gas treatment body formed of a porous ceramic material such as silicon carbide or cordierite, a metal casing that houses the exhaust gas treatment body, and a holding sealing material (mat material) disposed between the exhaust gas treatment body and the metal casing. The holding sealing material (mat material) is arranged mainly to prevent the exhaust gas treatment body from being damaged due to contact with the metal casing covering its outer periphery as a result of vibrations or impacts generated during vehicle operation, and to prevent exhaust gas from leaking through a space between the exhaust gas treatment body and the metal casing.

As a mat material used for such applications, Patent Literature 1 discloses a holding sealing material including a plurality of mats containing inorganic fibers and being layered, the plurality of mats being bundled by a belt-shaped body.

### CITATION LIST

### - Patent Literature

Patent Literature 1: JP 2012-233433 A

### SUMMARY OF INVENTION

### - Technical Problem

In an operation of wrapping the mat material around the exhaust gas treatment body, a portion of the mat material is sometimes held for transport within the work area.

Since the mat material is used by wrapping it around the exhaust gas treatment body and is flexible, when a portion of the mat material is held for transport, a portion of the mat material sags due to gravity.

If the mat material is soft and the sagging amount is large, a sagging portion may collide with other equipment or pillars in the work area during transport, and therefore reduction of the sagging amount is required.

The present invention has been made in view of such problems and aims to provide a mat material capable of preventing sagging of the mat material.

### - Solution to Problem

The mat material of the present invention relates to a mat material including:
a stacked mat in which a plurality of mats each containing inorganic fibers and having a rectangular shape in a plan view are stacked; and
a fixing member fixing the stacked mat,
the plurality of mats including a first mat and a second mat,
a sagging amount of the first mat measured in a sagging test conducted using two mats of the same type stacked and fixed together being greater than a sagging amount of the second mat measured in the sagging test,
the mat material exhibiting a sagging amount of 60 mm or less when measured with the second mat placed at the bottom and the first mat placed on the top.

The mat material of the present invention includes the first mat and the second mat having different sagging amounts.

The first mat is prone to sagging, whereas the second mat is resistant to sagging.

When the first mat and the second mat are combined to form a stacked mat and transported, the second mat, which is resistant to sagging, makes the stacked mat resistant to sagging as a whole, even though the stacked mat includes the first mat prone to sagging. As a result, the sagging amount of the mat material can be reduced to 60 mm or less. Accordingly, a mat material capable of preventing sagging can be obtained.

In the mat material of the present invention, preferably, the plurality of mats further contain an organic binder in an amount of 10.0 wt% or less relative to a weight of the stacked mat.

Incorporating an organic binder into a mat increases the strength of the mat, thereby making it possible to obtain a mat material that is resistant to sagging.

Meanwhile, although the mat material is used inside an exhaust gas purification apparatus, the exhaust gas purification apparatus operates in a high-temperature environment, and the organic binder may volatilize. Therefore, for a mat material that is intended to be used inside the exhaust gas purification apparatus, the amount of the organic binder is required not to be high.

Increasing the amount of the organic binder contained in the mat makes the mat harder and less prone to sagging. However, since the first mat may be a mat that is prone to sagging, a mat having a small amount of the organic binder can be used as the first mat. With such a first mat containing a small amount of the organic binder, the mat material can be prevented from sagging even when the overall amount of the organic binder in the stacked mat is as small as 10.0 wt% or less.

In the mat material of the present invention, preferably, an amount of the organic binder in the second mat is greater than an amount of the organic binder in the first mat.

Increasing the amount of the organic binder contained in the mat makes the mat harder and less prone to sagging. Therefore, making the amount of the organic binder in the second mat greater than the amount of the organic binder in the first mat can be used as a means for making the sagging amount of the second mat smaller than the sagging amount of the first mat.

In the mat material of the present invention, preferably, an amount of the organic binder in the first mat is 0.1 wt% or more and less than 4.0 wt%, and
an amount of the organic binder in the second mat is 4.0 wt% or more and 12.0 wt% or less.

When the amount of the organic binder in the second mat is 4.0 wt% or more and 12.0 wt% or less, the second mat becomes harder and exhibits a smaller sagging amount, thereby providing a mat effective for preventing sagging of the mat material as a whole. In addition, when the amount of the organic binder in the first mat is 0.1 wt% or more and less than 4.0 wt%, the first mat becomes a mat having a small amount of the organic binder, thereby providing a mat effective for keeping the amount of the organic binder at or below a predetermined amount.

In the mat material of the present invention, preferably, a length of the second mat in a long-side direction is longer than a length of the first mat in the long-side direction.

Placing the second mat, which has a longer length in the long-side direction, on the outer side during wrapping reduces the influence of a length difference between the inner and outer peripheries caused by wrapping, thereby providing a mat material having good wrapping properties.

In addition, placing the first mat, which is relatively soft and has a larger sagging amount, on the inner side during wrapping facilitates wrapping of the mat material along the outer peripheral shape of the object around which the mat material is to be wrapped.

In the mat material of the present invention, preferably, both the first mat and the second mat are needle mats.

Alternatively, in the mat material of the present invention, preferably, both the first mat and the second mat are papermaking mats.

That both the first mat and the second mat are needle mats, or both the first mat and the second mat are papermaking mats, means that the first mat and the second mat are the same type of mat. That is, the difference between the sagging amounts of the first mat and the second mat does not result from using different types of mats in the mat material.

In the mat material of the present invention, preferably, the fixing member is a band-shaped body that is wrapped around the stacked mat to fix the stacked mat.

In the mat material of the present invention, preferably, the fixing member is a sewing thread that is sewn to the stacked mat to fix the stacked mat.

In the mat material of the present invention, preferably, the fixing member is an adhesive that bonds the plurality of mats to each other to fix the stacked mat.

Fixing the stacked mat with any of these fixing members makes it possible to obtain a mat material in which a plurality of mats are stacked and fixed.

The exhaust gas purification apparatus of the present invention relates to an exhaust gas purification apparatus including:
an exhaust gas treatment body;
a metal casing housing the exhaust gas treatment body; and
a mat material disposed between the exhaust gas treatment body and the metal casing and holding the exhaust gas treatment body,
the mat material being the mat material of the present invention,
the first mat being disposed adjacent to the exhaust gas treatment body.

In the exhaust gas purification apparatus of the present invention, the amount of the organic binder in the mat material is set to be at or below a predetermined amount. Thus, the amount of volatilization of the organic binder can be suppressed even when the mat material is exposed to a high-temperature environment during use of the exhaust gas purification apparatus.

In addition, during transport of the mat material for wrapping the mat material around the exhaust gas treatment body, sagging of the mat material can be effectively prevented by transporting the mat material with the second mat placed at the bottom and the first mat on the top. Transporting the mat material in this arrangement and wrapping the mat material around the exhaust gas treatment body positions the first mat adjacent to the exhaust gas treatment body.

### BRIEF DESCRIPTION OF DRAWINGS

FIG. 1 is a schematic perspective view illustrating an example of a mat material.
FIG. 2 is a side view for explaining a sagging test.
FIG. 3 is a schematic cross-sectional view illustrating an example of an exhaust gas purification apparatus.
FIG. 4 is a schematic perspective view illustrating an example of a mat material in which the fixing member is a sewing thread.
FIG. 5 is a schematic perspective view illustrating an example of a mat material in which the fixing member is an adhesive.

### DESCRIPTION OF EMBODIMENTS

Hereinafter, examples of the mat material and the exhaust gas purification apparatus of the present invention will be described in detail with reference to the drawings.

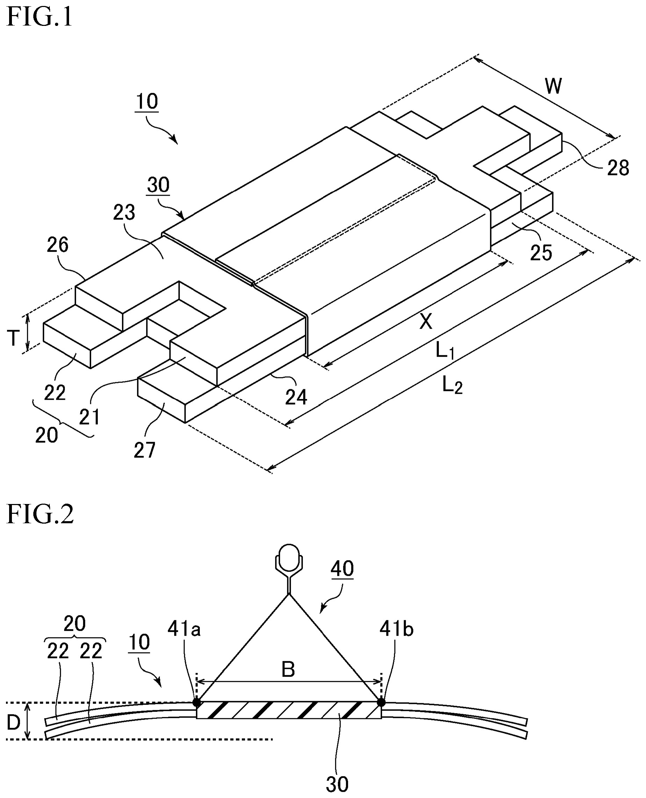

FIG. 1 is a schematic perspective view illustrating an example of a mat material.

A mat material 10 shown in FIG. 1 includes a stacked mat 20 in which a plurality of mats are stacked, and a fixing member 30 fixing the mats. In the mat material 10 shown in FIG. 1, the fixing member 30 is a band-shaped body that is wrapped around the stacked mat 20.

The stacked mat 20 is a stack of two mats, namely a first mat 21 and a second mat 22.

The first mat 21 and the second mat 22 are mats having long lengths in the long-side direction (the direction indicated by the double-headed arrows L₁ and L₂ in FIG. 1). The first mat 21 is a mat whose length in the long-side direction is shorter than that of the second mat 22, and its length in the long-side direction is indicated by the double-headed arrow L₁. The second mat 22 is a mat whose length in the long-side direction is longer than that of the first mat 21, and its length in the long-side direction is indicated by the double-headed arrow L₂.

The stacked mat 20 has two main surfaces. A main surface on which the length of the mat in the long-side direction is the shortest is a first main surface 23, and a main surface on which the length of the mat in the long-side direction is the longest is a second main surface 24.

The first main surface 23 is the upper main surface of the first mat 21, and the second main surface 24 is the lower main surface of the second mat 22.

The stacked mat 20 has four side surfaces. Side surfaces along the long-side direction of the mat are a first long side surface 25 and a second long side surface 26. Side surfaces along the width direction of the mat (the direction indicated by the double-headed arrow W in FIG. 1) are a first short side surface 27 and a second short side surface 28.

The first short side surface 27 has a recess formed thereon, and the second short side surface 28 has a projection formed thereon. The recess and the projection have shapes that perfectly fit each other when the mat material is wrapped around a product having a cylindrical outer periphery, such as an exhaust gas purification apparatus, an exhaust gas treatment body, or an exhaust pipe.

In the mat material of the present embodiment, the shapes of the fitting portions are described as a recess and a projection. However, the shapes of the fitting portions may alternatively be a combination of L-shaped portions.

In FIG. 1, the direction indicated by the double-headed arrow T corresponds to the thickness direction of the mat material.

The mats constituting the stacked mat each contain inorganic fibers. Any inorganic fibers, such as alumina fibers or silica fibers, may be used. Glass fibers or biosoluble fibers may also be used. Fibers may be selected depending on properties required for the mat material, such as heat resistance and wind erosion-resistance. Use of large-diameter fibers and long fibers compatible with country-specific environmental regulations is preferred.

Of these, inorganic fibers including low-crystalline alumina are preferred, and inorganic fibers including low-crystalline alumina having a mullite composition are more preferred. In addition, inorganic fibers including spinel-type compounds are still more preferred.

The number of mats stacked in the stacked mat is not limited as long as it is two or more. The number of mats is preferably two or three, more preferably two. When the number of mats is three or more, one of the mats located on the outermost sides of the stacked mat is defined as the first mat, and the other of the mats is defined as the second mat.

Preferred ranges for the dimensions of the stacked mat are as follows.

The length of the stacked mat in the long-side direction (the length indicated by the double-headed arrow L₁ in FIG. 1, corresponding to the length of the first mat 21 having the first main surface 23 in the long-side direction) is preferably 333 mm or more and 1500 mm or less.

The length of the stacked mat in the width direction (the length indicated by the double-headed arrow W in FIG. 1) preferably falls within a range of 40 to 400 mm.

The thickness of the stacked mat (the length indicated by the double-headed arrow T in FIG. 1) preferably falls within a range of 4 to 60 mm.

A stacked mat having a thickness of less than 4 mm has poor thermal insulation and soundproof performance because it is excessively thin. In contrast, a stacked mat having a thickness of more than 60 mm has poor flexibility and poor mountability to a member on which the stacked mat is to be mounted.

The stacked mat has a long-side direction which is a wrapping direction, and a short-side direction which is perpendicular to the long-side direction.

Out of two ends of the stacked mat in the long-side direction, preferably, one end (a first end) has a projection formed thereon, and the other end (a second end) has a recess formed thereon. Preferably, the projection and the recess of the stacked mat have shapes that perfectly fit each other when the stacked mat is wrapped around a product having a cylindrical outer periphery, such as an exhaust gas purification apparatus, an exhaust gas treatment body, or an exhaust pipe.

The stacked mat may have a shape without a projection and a recess.

In the stacked mat of the present embodiment, the shapes of the fitting portions are described as a recess and a projection. However, the shapes of the fitting portions may alternatively be a combination of L-shaped portions.

The first mat and the second mat included in the mat material are mats having different sagging amounts.

The sagging amount of the mat material of the present invention will be described below.

FIG. 2 is a side view for explaining a sagging test.

The sagging amount is measured in a sagging test conducted using two mats of the same type stacked together. The term "mats of the same type" refers to mats having the same composition and dimensions.

In FIG. 2, a stacked mat 20 in which two second mats 22 are stacked is shown.

For measuring the sagging amount, two mats of the same type are stacked to form a stacked mat, and the center in the long-side direction of the stacked mat is fixed with a fixing member. The fixing conditions of the fixing member are the same as those applied to the mat material to be evaluated.

In FIG. 2, the stacked mat 20 is fixed by wrapping a band-shaped body serving as the fixing member 30 around the stacked mat 20.

The sagging amount is measured by simulating a state in which a portion of the mat material is held and transported, and measuring the sagging amount in a state in which a portion of the mat material is allowed to sag using a jig.

FIG. 2 shows a state in which the sagging amount is measured by holding the mat material 10 at holding portions 41a and 41b of a jig 40. The distance between the holding portions 41a and 41b (the distance along the long-side direction of the mat material) is indicated by the double-headed arrow B. The distance B between the holding portions is set to be the same as the dimension X of the fixing member 30 in the long-side direction of the mat material.

When the mat material is held as shown in FIG. 2, the ends in the long-side direction of the mat material sag. The amount of the sagging (the length indicated by the double-headed arrow D in FIG. 2) is measured and defined as the sagging amount of the mat.

The sagging amount of a mat material including a stacked mat in which two first mats are stacked is defined as D1. The sagging amount of a mat material including a stacked mat in which two second mats are stacked is defined as D2. Then, the relationship D1 > D2 holds.

A first mat and a second mat having such a relationship are combined to form a stacked mat, and the stacked mat is fixed with a fixing member to form a mat material.

A mat material including the stacked mat in which the first mat and the second mat are combined and exhibiting a sagging amount of 60 mm or less when measured with the second mat placed at the bottom and the first mat placed on the top corresponds to the mat material of the present invention.

The first mat is prone to sagging, whereas the second mat is resistant to sagging. Therefore, in an arrangement in which the second mat is placed at the bottom and the first mat is placed on the top, even when the first mat sags, the second mat, which is resistant to sagging and positioned under the first mat, supports the sagging portion of the first mat. As a result, the sagging amount of the entire mat material substantially depends on the sagging amount of the second mat.

Conversely, when the sagging amount is measured with the first mat placed at the bottom and the second mat placed on the top, the first mat sags without being supported. Therefore, the sagging amount of the entire mat material substantially depends on the sagging amount of the first mat. This results in a mat material having a large overall sagging amount.

Therefore, for transport of the mat material of the present invention, placing the second mat at the bottom enables an effect of reducing the sagging amount.

The mat material of the present invention exhibits a sagging amount, as measured with the second mat placed at the bottom and the first mat placed on the top, of preferably 50 mm or less, more preferably 40 mm or less.

The sagging amount of each of the first mat and the second mat is not limited. However, the first mat preferably exhibits a sagging amount of 40 to 120 mm, more preferably 70 to 100 mm, the sagging amount being measured in a sagging test conducted using two mats of the same type stacked together.

The second mat preferably exhibits a sagging amount of 60 mm or less, more preferably 50 mm or less, still more preferably 40 mm or less, while preferably exhibiting a sagging amount of 20 mm or more.

These sagging amounts may be measured using mats each having a length of 600 mm in the long-side direction, a width of 100 mm, and a thickness of 8 mm, with the distance between the holding portions set to 300 mm.

The first mat and the second mat have different sagging amounts. One method for differentiating their sagging amounts is to adjust the strength of the mats by incorporating an organic binder into the mat(s).

That is, in the mat material of the present invention, the mats preferably further contain an organic binder.

Incorporating an organic binder into a mat increases the strength of the mat, thereby making the mat resistant to sagging. Therefore, preferably, the second mat contains an organic binder.

Also preferably, both the first mat and the second mat may contain an organic binder, and the amount of the organic binder in the second mat may be greater than that in the first mat.

In the mat material of the present invention, the amount of the organic binder is preferably 10.0 wt% or less relative to the weight of the stacked mat.

Although the mat material is used inside an exhaust gas purification apparatus, the exhaust gas purification apparatus operates in a high-temperature environment, and the organic binder may volatilize. Therefore, for a mat material that is intended to be used inside the exhaust gas purification apparatus, the amount of the organic binder is required not to be high.

An index amount of the organic binder is 10.0 wt% or less relative to the weight of the stacked mat as such an amount causes almost no practical problems.

In the mat material of the present invention, since the first mat may be a mat that is prone to sagging, a mat having a small amount of the organic binder can be used as the first mat. With such a first mat containing a small amount of the organic binder, the mat material can be prevented from sagging even when the overall amount of the organic binder in the stacked mat is as small as 10.0 wt% or less.

Examples of the organic binder include rubber-based resins, styrene-based resins, silicone-based resins, acrylic resins, polyester-based resins, and polyurethane resins.

A mat can be made to contain the organic binder by applying an emulsion liquid containing, as a polymer resin component, an acrylic resin, a rubber-based resin, or the like to the inorganic fibers and then removing the solvent.

The organic binder preferably has a glass transition temperature of 5°C or lower, more preferably -5°C or lower, still more preferably -10°C or lower, particularly preferably -30°C or lower.

In the mat material of the present invention, the amount of the organic binder in the first mat is preferably 0.1 wt% or more and less than 4.0 wt%.

The amount of the organic binder in the second mat is preferably 4.0 wt% or more and 12.0 wt% or less.

When the amount of the organic binder in the second mat is 4.0 wt% or more and 12.0 wt% or less, the second mat becomes harder and exhibits a smaller sagging amount, thereby providing a mat effective for preventing sagging of the mat material as a whole. More preferably, the amount of the organic binder in the second mat is 7.0 wt% or more and 12.0 wt% or less.

When the amount of the organic binder in the first mat is 0.1 wt% or more and less than 4.0 wt%, the first mat becomes a mat having a small amount of the organic binder, thereby providing a mat effective for keeping the amount of the organic binder at or below a predetermined amount.

More preferably, the amount of the organic binder in the first mat is 0.2 wt% or more and 2.0 wt% or less.

The ratio of the amount of the organic binder in the second mat to that in the first mat is preferably 3.5 to 60.

The first mat and the second mat may each contain an inorganic binder. Varying the amount of the inorganic binder also enables adjusting the strength and sagging amount of the mat.

In the mat material of the present invention, the fixing member is preferably a band-shaped body that is wrapped around the stacked mat to fix the stacked mat.

The dimension of the band-shaped body in the length direction of the mat material is the length indicated by the double-headed arrow X in FIG. 1, and this length is preferably 20 to 400 mm.

A band-shaped body that is long in the length direction of the mat material can fix the mat material across a wide area, thereby reducing sagging of the mat material. However, such a long band-shaped body exhibits poor wrapping properties.

The band-shaped body is preferably provided in a region including the center in the long-side direction of the mat material, so that the stacked mat is fixed at the center in the long-side direction of the mat material. The band-shaped body may also be divided into a plurality of band-shaped bodies and wrapped around the stacked mat to fix the stacked mat. In this case, a region sandwiched between the plurality of band-shaped bodies preferably includes the center in the long-side direction of the mat material. Furthermore, the dimension of the band-shaped body in the length direction of the mat material is defined as the width of the region sandwiched between the plurality of band-shaped bodies.

The band-shaped body preferably contains at least one material selected from the group consisting of organic materials, ceramic materials, and metal materials.

When the band-shaped body is made of an organic material, the organic material is not limited and may be, for example, paper, a resin film, or a nonwoven fabric made of organic fibers.

The band-shaped body is preferably made of at least one resin selected from the group consisting of polyester, polyethylene, and polypropylene.

These materials are preferred because they have excellent flexibility and elasticity, and can be heat-sealed to the stacked mat.

Examples of the nonwoven fabric made of organic fibers include a fabric in which polyethylene (PE) powder is fusion-bonded to polyethylene terephthalate (PET) fibers.

Other usable organic fibers include polypropylene (PP) and rayon.

When the band-shaped body is a resin film, the organic material forming the resin film may be, for example, polyethylene terephthalate (PET), polypropylene (PP), or polyethylene (PE).

When the band-shaped body is made of a ceramic material, the ceramic material is not limited and may be, for example, a sheet made of alumina, silica, or titania. A cloth made of ceramic fibers may also be used, such as an alumina cloth, a silica cloth, or a titania cloth.

When the band-shaped body is made of a metal material, the metal material is not limited and may be, for example, a sheet made of stainless steel, aluminum, or nickel. A mesh made of metal fibers may also be used, such as a stainless steel mesh or an aluminum mesh.

The band-shaped body is not necessarily bonded to the stacked mat.

When the band-shaped body is not bonded to the stacked mat, the positions of the mats constituting the stacked mat can be adjusted.

The band-shaped body may also be bonded to the stacked mat via an adhesive. When the band-shaped body is made of an organic material, the band-shaped body itself may be heat-sealed to the stacked mat without using an adhesive.

When the band-shaped body and the stacked mat are bonded using an adhesive, examples of the adhesive include acrylic adhesives, acrylate latex, urethane-based adhesives, and epoxy resin-based adhesives.

When the band-shaped body itself is heat-sealed to the stacked mat, the heat sealing may be performed at an appropriate heating temperature depending on the type of the organic material forming the band-shaped body.

The length of the second mat in the long-side direction is preferably longer than the length of the first mat in the long-side direction.

FIG. 1 also shows that the mat having a longer length in the long-side direction is defined as the second mat 22, and the mat having a shorter length in the long-side direction is defined as the first mat 21.

Placing the second mat, which has a longer length in the long-side direction, on the outer side during wrapping reduces the influence of the difference between the inner and outer peripheries caused by wrapping, thereby providing a mat material having good wrapping properties.

In addition, placing the first mat, which is relatively soft and has a larger sagging amount, on the inner side during wrapping facilitates wrapping of the mat material along the outer peripheral shape of the object around which the mat material is to be wrapped.

Furthermore, transporting the mat material with the second mat, which has a longer length in the long-side direction and a smaller sagging amount, placed at the bottom stabilizes the transport, and reduces problems caused by sagging of the mat material during transport.

The mats constituting the stacked mat can each be obtained by various methods. For example, it can be produced by a papermaking method or a needling method.

In the case of the papermaking method, for example, each mat can be produced in the following manner.

Inorganic fibers are spread, and the spread inorganic fibers are dispersed in a solvent to obtain a mixture. The mixture is poured into a mold with a mesh for filtering at the bottom, and the solvent in the mixture is removed, whereby an inorganic fiber aggregate is obtained. The inorganic fiber aggregate is then dried, whereby a mat can be obtained.

In the case of the needling method, for example, each mat can be produced in the following manner.

A spinning mixture containing an aqueous basic aluminum chloride solution, silica sol, and the like as raw materials is spun by a blowing method, whereby an inorganic fiber precursor having an average fiber diameter of 3 to 10 µm is produced. Subsequently, the inorganic fiber precursor is compressed to produce a continuous sheet-shaped product having a predetermined size, followed by firing, whereby a mat is obtained. Needle punching is performed before or after the firing to entangle the inorganic fibers with each other.

Preferably, both the first mat and the second mat are needle mats. A needle mat is a mat produced by the needling method.

Alternatively, both the first mat and the second mat may be papermaking mats. A papermaking mat is a mat produced by the papermaking method.

That both the first mat and the second mat are needle mats, or both the first mat and the second mat are papermaking mats, means that the first mat and the second mat are the same type of mat. That is, the difference between the sagging amounts of the first mat and the second mat does not result from using different types of mats in the mat material.

Preferably, an organic binder is incorporated into both the first mat and the second mat. Adjusting the amount of the organic binder incorporated into the first mat and the second mat enables adjusting the sagging amounts of the first mat and the second mat, thereby allowing the first mat and the second mat to have sagging amounts falling within appropriate ranges.

The mat material of the present invention can be obtained by stacking the first mat and the second mat to form a stacked mat, and wrapping a band-shaped body around the stacked mat to fix the stacked mat.

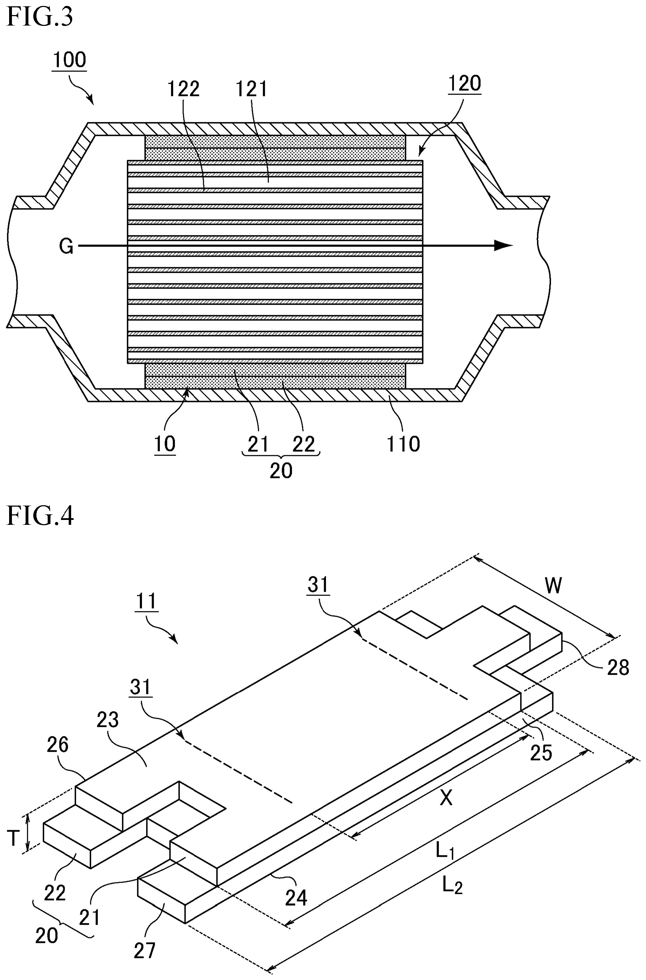

FIG. 3 is a schematic cross-sectional view illustrating an example of an exhaust gas purification apparatus.

As shown in FIG. 3, an exhaust gas purification apparatus 100 of the present invention includes a metal casing 110, an exhaust gas treatment body 120 housed in the metal casing 110, and the mat material 10 disposed between the exhaust gas treatment body 120 and the metal casing 110.

The exhaust gas treatment body 120 has a pillar shape in which a plurality of through-holes 121 are arranged in parallel in the long-side direction, with partition walls 122 interposed therebetween.

If necessary, to one end of the metal casing 110 are connected an inlet tube for introducing exhaust gas discharged from an internal combustion engine, and an outlet tube for discharging the exhaust gas that has passed through the exhaust gas purification apparatus to the outside.

Passage of exhaust gas through the exhaust gas purification apparatus 100 having the above-described configuration is described below with reference to FIG. 3.

As shown in FIG. 3, exhaust gas that is discharged from the internal combustion engine and that flowed into the exhaust gas purification apparatus 100 (in FIG. 3, the exhaust gas is indicated by G, and the flow of exhaust gas is indicated by the arrow) flows into the through-holes 121 that are open at an exhaust gas inlet-side end face of the exhaust gas treatment body 120, and harmful substances in the exhaust gas are purified by the action of a catalyst supported on the partition walls 122. The purified exhaust gas flows out from an exhaust gas outlet-side end face and is discharged to the outside.

In the exhaust gas purification apparatus 100 shown in FIG. 3, the mat material 10 is the mat material of the present invention. The first mat 21 is disposed adjacent to the exhaust gas treatment body 120, while the second mat 22 is disposed adjacent to the metal casing 110.

Any heat-resistant metal can be used as a material of the metal casing constituting the exhaust gas purification apparatus of the present invention. Specific examples include metals such as stainless steel, aluminum, and iron.

A suitable shape of the casing is, for example, a substantially cylindrical shape, a clam-shell shape, a shape with a substantially elliptical cross-section, a shape with a substantially polygonal cross-section, or the like.

The exhaust gas treatment body may include a porous non-oxide ceramic material such as silicon carbide or silicon nitride, or may include a porous oxide ceramic material such as alumina, cordierite, or mullite. Of these, silicon carbide is preferred.

The exhaust gas treatment body preferably supports a catalyst for purifying exhaust gas. Preferred examples of catalysts to be supported include noble metals such as platinum, palladium, and rhodium. Of these, platinum is more preferred. Examples of other catalysts that can be used include alkali metals such as potassium and sodium and alkaline-earth metals such as barium. Each of these catalysts may be used alone or in combination of two or more thereof.

These catalysts, when supported, facilitate removal of PM by combustion and allow purification of toxic exhaust gas.

Hereinafter, another embodiment of the mat material of the present invention will be described, in which the fixing member differs from that in the above embodiment.

FIG. 4 is a schematic perspective view illustrating an example of a mat material in which the fixing member is a sewing thread.

A mat material 11 shown in FIG. 4 includes a fixing member 31, which is a sewing thread, instead of the band-shaped body.

In the mat material 11, the first mat 21 and the second mat 22, which correspond to the plurality of mats constituting the stacked mat 20, are fixed together by the sewing thread.

Fixing with the sewing thread may be performed at one central location or at a plurality of locations set at predetermined intervals.

FIG. 4 shows an example in which the stacked mat is fixed by the sewing thread sewn at two locations.

When the sewing thread is sewn at a plurality of locations, the dimension of the fixing member in the long-side direction of the mat material is defined as the width of the region sandwiched between the plurality of sewing locations (the width indicated by the double-headed arrow X in FIG. 4).

The mat material may be the same as the mat material in which the fixing member is a band-shaped body as described above, except for the configuration of the fixing member.

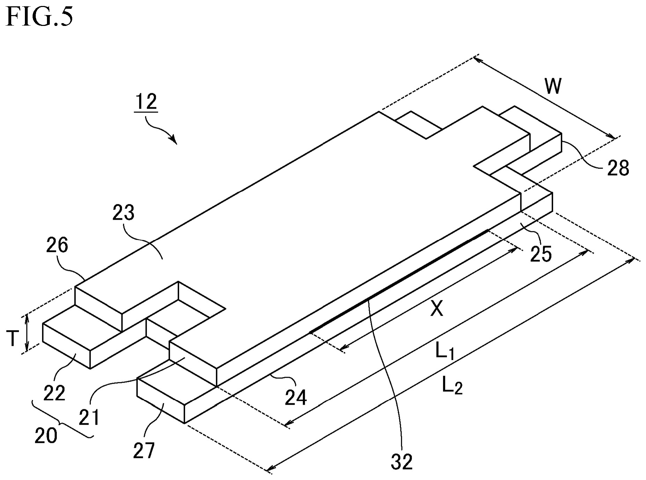

FIG. 5 is a schematic perspective view illustrating an example of a mat material in which the fixing member is an adhesive.

A mat material 12 shown in FIG. 5 includes a fixing member 32, which is an adhesive, instead of the band-shaped body.

In the mat material 12, the first mat 21 and the second mat 22, which correspond to the plurality of mats constituting the stacked mat 20, are fixed together by the adhesive bonding the surfaces of the mats to each other.

Fixing with the adhesive is preferably performed in a region including the center in the long-side direction of the mat material.

The dimension of the fixing member in the long-side direction of the mat material fixed with the adhesive is defined as the length indicated by the double-headed arrow X in FIG. 5.

The mat material may be the same as the mat material in which the fixing member is a band-shaped body as described above, except for the configuration of the fixing member.

The present description discloses the following matter.

Disclosure (1) relates to a mat material including:
a stacked mat in which a plurality of mats each containing inorganic fibers and having a rectangular shape in a plan view are stacked; and
a fixing member fixing the stacked mat,
the plurality of mats including a first mat and a second mat,
a sagging amount of the first mat measured in a sagging test conducted using two mats of the same type stacked and fixed together being greater than a sagging amount of the second mat measured in the sagging test,
the mat material exhibiting a sagging amount of 60 mm or less when measured with the second mat placed at the bottom and the first mat placed on the top.

Disclosure (2) relates to the mat material according to Disclosure (1), wherein the plurality of mats further contain an organic binder in an amount of 10.0 wt% or less relative to a weight of the stacked mat.

Disclosure (3) relates to the mat material according to Disclosure (2), wherein an amount of the organic binder in the second mat is greater than an amount of the organic binder in the first mat.

Disclosure (4) relates to the mat material according to Disclosure (2) or Disclosure (3), wherein an amount of the organic binder in the first mat is 0.1 wt% or more and less than 4.0 wt%, and
an amount of the organic binder in the second mat is 4.0 wt% or more and 12.0 wt% or less.

Disclosure (5) relates to the mat material according to any one of Disclosures (1) to (4), wherein a length of the second mat in a long-side direction is longer than a length of the first mat in the long-side direction.

Disclosure (6) relates to the mat material according to any one of Disclosures (1) to (5), wherein both the first mat and the second mat are needle mats.

Disclosure (7) relates to the mat material according to any one of Disclosures (1) to (5), wherein both the first mat and the second mat are papermaking mats.

Disclosure (8) relates to the mat material according to any one of Disclosures (1) to (7), wherein the fixing member is a band-shaped body that is wrapped around the stacked mat to fix the stacked mat.

Disclosure (9) relates to the mat material according to any one of Disclosures (1) to (7), wherein the fixing member is a sewing thread that is sewn to the stacked mat to fix the stacked mat.

Disclosure (10) relates to the mat material according to any one of Disclosures (1) to (7), wherein the fixing member is an adhesive that bonds the plurality of mats to each other to fix the stacked mat.

Disclosure (11) relates to an exhaust gas purification apparatus including:
an exhaust gas treatment body;
a metal casing housing the exhaust gas treatment body; and
a mat material disposed between the exhaust gas treatment body and the metal casing and holding the exhaust gas treatment body,
the mat material being the mat material according to any one of Disclosures (1) to (10),
the first mat being disposed adjacent to the exhaust gas treatment body.

### EXAMPLES

Sheet-shaped members each containing inorganic fibers (mullite fibers) having a basis weight (fiber weight per unit area) of 1400 g/m² were produced by the needling method.

These sheet-shaped members were then subjected to punching to produce needle mats each having a length of 600 mm in the long-side direction, a width of 100 mm, and a thickness of 8 mm.

The needle mats have a shape including a recess and a projection as shown in FIG. 1.

An organic binder was incorporated into the needle mats in different amounts, so that three types of mats were obtained.
Mat A: amount of organic binder 10.0 wt%
Mat B: amount of organic binder 4.5 wt%
Mat C: amount of organic binder 1.0 wt%

The sagging amounts of mat materials using Mat A, Mat B, and Mat C were measured. Each mat material was formed by stacking two mats of the same type to form a stacked mat and wrapping a nonwoven fabric having a width of 300 mm around the stacked mat to fix the stacked mat.

In measurement of the sagging amount performed by the method of measuring the sagging amount shown in FIG. 2, the distance B between the holding portions was set to 300 mm.

The measured sagging amounts are shown in Table 1 as Test Nos. 1 to 3. The sagging amounts measured in Test Nos. 1 to 3 correspond to the sagging amounts of the mat materials using Mat A, Mat B, and Mat C, respectively.

The sagging amounts of mat materials each including different types of mats were measured. Each mat material was formed by placing a mat having a smaller sagging amount at the bottom and a mat having a larger sagging amount on the top to form a stacked mat, and wrapping a nonwoven fabric having a width of 300 mm around the stacked mat to fix the stacked mat.

The measured sagging amounts are shown in Table 1 as Test Nos. 4 and 5.

**[Table 1]**

| Test No. | Bottom | Top | Sagging amount | Amount of organic binder |
|---|---|---|---|---|
| | | | (mm) | (wt%) |
| 1 | Mat A | Mat A | 33 | 10.0 |
| 2 | Mat B | Mat B | 52 | 4.5 |
| 3 | Mat C | Mat C | 92 | 1.0 |
| 4 | Mat A | Mat B | 37 | 7.25 |
| 5 | Mat A | Mat C | 37 | 5.5 |

Test Nos. 4 and 5 correspond to the mat material of the present invention, and the resulting mat materials exhibit small sagging amounts. Furthermore, the amounts of the organic binder in these mat materials are smaller than that of the mat material of Test No. 1 in which two Mats A were stacked. In addition, the sagging amounts of these mat materials are smaller than those of the mat material of Test No. 2 in which two Mats B were stacked and the mat material of Test No. 3 in which two Mats C were stacked.

### REFERENCE SIGNS LIST

- 10, 11, 12: mat material
- 20: stacked mat
- 21: first mat
- 22: second mat
- 23: first main surface of stacked mat
- 24: second main surface of stacked mat
- 25: first long side surface of stacked mat
- 26: second long side surface of stacked mat
- 27: first short side surface of stacked mat
- 28: second short side surface of stacked mat
- 30: fixing member (band-shaped body)
- 31: fixing member (sewing thread)
- 32: fixing member (adhesive)
- 40: jig
- 41a, 41b: holding portions
- 100: exhaust gas purification apparatus
- 110: metal casing
- 120: exhaust gas treatment body
- 121: through-hole
- 122: partition wall

## Claims

1. A mat material comprising:
a stacked mat in which a plurality of mats each containing inorganic fibers and having a rectangular shape in a plan view are stacked; and
a fixing member fixing the stacked mat,
the plurality of mats including a first mat and a second mat,
a sagging amount of the first mat measured in a sagging test conducted using two mats of the same type stacked together being greater than a sagging amount of the second mat measured in the sagging test,
the mat material exhibiting a sagging amount of 60 mm or less when measured with the second mat placed at the bottom and the first mat placed on the top.

2. The mat material according to claim 1,
wherein the plurality of mats further contain an organic binder in an amount of 10.0 wt% or less relative to a weight of the stacked mat.

3. The mat material according to claim 2,
wherein an amount of the organic binder in the second mat is greater than an amount of the organic binder in the first mat.

4. The mat material according to claim 2 or 3,
wherein an amount of the organic binder in the first mat is 0.1 wt% or more and less than 4.0 wt%, and
an amount of the organic binder in the second mat is 4.0 wt% or more and 12.0 wt% or less.

5. The mat material according to any one of claims 1 to 4,
wherein a length of the second mat in a long-side direction is longer than a length of the first mat in the long-side direction.

6. The mat material according to any one of claims 1 to 5,
wherein both the first mat and the second mat are needle mats.

7. The mat material according to any one of claims 1 to 5,
wherein both the first mat and the second mat are papermaking mats.

8. The mat material according to any one of claims 1 to 7,
wherein the fixing member is a band-shaped body that is wrapped around the stacked mat to fix the stacked mat.

9. The mat material according to any one of claims 1 to 7,
wherein the fixing member is a sewing thread that is sewn to the stacked mat to fix the stacked mat.

10. The mat material according to any one of claims 1 to 7,
wherein the fixing member is an adhesive that bonds the plurality of mats to each other to fix the stacked mat.

11. An exhaust gas purification apparatus comprising:
an exhaust gas treatment body;
a metal casing housing the exhaust gas treatment body; and
a mat material disposed between the exhaust gas treatment body and the metal casing and holding the exhaust gas treatment body,
the mat material being the mat material according to any one of claims 1 to 10,
the first mat being disposed adjacent to the exhaust gas treatment body.
